# EUROPÄISCHE PATENTSCHRIFT

(11) **EP 3 065 271 B1**
(45) Veröffentlichungstag und Bekanntmachung des Hinweises auf die Patenterteilung: **15.05.2019**
(21) Anmeldenummer: 16158457.8
(22) Anmeldetag: 03.03.2016
(51) Int. Cl.: H02K 9/19, H02K 7/102

(54) **ANORDNUNG ZUR FLÜSSIGKEITSKÜHLUNG EINER ELEKTRISCHEN MOTORGENERATOREINHEIT**
LIQUID COOLING ASSEMBLY FOR AN ELECTRICAL MOTOR GENERATOR UNIT
SYSTEME DESTINE A REFROIDIR LE LIQUIDE D'UNE UNITE DE GENERATEUR DE MOTEUR ELECTRIQUE

(30) Priorität: 05.03.2015 DE 102015203974
(43) Veröffentlichungstag der Anmeldung: 07.09.2016
(73) Patentinhaber: Deere & Company, Moline, IL 61265 (US)
(72) Erfinder: Müller, David, 76297 Stutensee (DE); Gugel, Rainer, 68723 Plankstadt (DE); Fritz, Norbert, 68549 Ilvesheim (DE)
(74) Vertreter: Dehnhardt, Florian Christopher

(56) Entgegenhaltungen:
- EP-A1- 2 262 081
- EP-A1- 2 840 690
- US-A1- 2008 073 984
- US-A1- 2009 224 715
- US-A1- 2011 285 339
- US-A1- 2012 205 994
- US-A1- 2015 035 391
- US-A1- 2015 042 184

## Beschreibung

Die Erfindung betrifft eine Anordnung zur Flüssigkeitskühlung einer elektrischen Motorgeneratoreinheit, mit einer elektrischen Motorgeneratoreinheit, die einen zwischen einem Stator und einem Rotor verlaufenden magnetischen Luftspalt aufweist, wobei der Luftspalt zur Kühlung der Motorgeneratoreinheit mit von außen zugeführter Kühlflüssigkeit beaufschlagbar ist, und mit einer Kontrolleinrichtung, die den Volumenstrom der zugeführten Kühlflüssigkeit in Abhängigkeit eines erfassten Istwerts einer Betriebstemperaturgröße der elektrischen Motorgeneratoreinheit anpasst.

Flüssigkeitsgekühlte elektrische Motorgeneratoreinheiten finden unter anderem im Bereich landwirtschaftlicher Nutzfahrzeuge Verwendung und dienen dort der Verwirklichung stufenlos schaltbarer Getriebebaugruppen oder der elektrischen Versorgung von Zusatzaggregaten des landwirtschaftlichen Nutzfahrzeugs mittels eines Kurbelwellengenerators oder eines externen Anbaugenerators. Die meist als Synchronmotorgeneratoren ausgebildeten Motorgeneratoreinheiten weisen einen Stator mit einem Statorblechpaket nebst zugehörigen Statorwicklungen sowie einen innerhalb des Stators drehbar gelagerten, aus permanent magnetisiertem Material bestehenden Rotor auf. Um die in den Statorwicklungen betriebsbedingt auftretende Verlustwärme abzuführen, weist der Synchronmotorgenerator einen Einlass auf, über den unter Druck stehende Kühlflüssigkeit von außen unter anderem durch einen zwischen Stator und Rotor verlaufenden magnetischen Luftspalt geleitet werden kann. Die im Luftspalt befindliche Kühlflüssigkeit führt zum Auftreten wirkungsgradmindernder Scher- bzw. Reibungskräfte zwischen Stator und Rotor, wobei diese mit dem Druck bzw. Volumenstrom der zugeführten Kühlflüssigkeit zunehmen. In aller Regel handelt es sich bei der Kühlflüssigkeit um aus einem zentralen Versorgungssystem des landwirtschaftlichen Nutzfahrzeugs bzw. externen Anbaugenerators abgezweigtes Hydraulik- oder Getriebeöl, dessen Druck bzw. Volumenstrom systemseitig festgelegt ist, sodass ein geeigneter Kompromiss zwischen der erforderlichen Kühlleistung einerseits und dem Wirkungsgrad des Synchronmotorgenerators andererseits zu finden ist.

In diesem Zusammenhang geht aus der US 2012/0205994 A1 ein Kühlsystem für eine elektrische Maschine in Gestalt eines Motors oder Generators hervor, bei der ein Luftspalt mittels einer Förderpumpe mit Kühlflüssigkeit beaufschlagbar ist. Hierbei wird zur Verringerung von Planschverlusten eine umso geringere Kühlmittelmenge eingesteuert je höher die Drehzahl der elektrischen Maschine ist.

Die US 2008/0073984 A1 zeigt ferner eine elektrische Maschine mit einem Flüssigkeitskontrollsystem zur Regulierung der Flussrate einer Flüssigkeit, die der elektrischen Maschine zum Zwecke der Kühlung zuführbar ist. Hierbei erfolgt eine temperaturabhänge Ansteuerung einer aus einem Flüssigkeitsreservoir gespeisten Pumpe derart, dass Planschverluste innerhalb eines Luftspalts der elektrischen Maschine minimiert werden.

Die US 2012/205994 A1 offenbart eine Anordnung zur Flüssigkeitskühlung einer elektrischen Motorgeneratoreinheit, wobei der Volumenstrom der Kühlflüssigkeit von der Geschwindigkeit des Rotors abhängt. In der Anordnung der US 2015/035391 A1 hängt der Volumenstrom der Kühlflüssigkeit von der Betriebstemperatur ab. Trotzdem zeigen diese Dokumente keine Kompensierung der Viskositätsänderung.

Es ist Aufgabe der vorliegenden Erfindung, eine Anordnung zur Flüssigkeitskühlung einer elektrischen Motorgeneratoreinheit zu schaffen, die eine weitere Optimierung des Kühlleistungs-Wirkungsgrad-Verhältnisses erlaubt.

Diese Aufgabe wird durch eine Anordnung mit den Merkmalen des Patentanspruchs 1 gelöst.

Die Anordnung zur Flüssigkeitskühlung einer elektrischen Motorgeneratoreinheit umfasst eine elektrische Motorgeneratoreinheit, die einen zwischen einem Stator und einem Rotor verlaufenden magnetischen Luftspalt aufweist, wobei der Luftspalt zur Kühlung der elektrischen Motorgeneratoreinheit mit von außen zugeführter Kühlflüssigkeit beaufschlagbar ist. Eine Kontrolleinrichtung passt den Druck und/oder Volumenstrom der zugeführten Kühlflüssigkeit in Abhängigkeit eines erfassten Istwerts einer Betriebstemperaturgröße der elektrischen Motorgeneratoreinheit an. Die Kontrolleinheit begrenzt den Druck und/oder Volumenstrom während des Motorbetriebs nach oben und/oder unten hin, wobei die Kontrolleinheit zur Begrenzung des Drucks und/oder Volumenstroms der zugeführten Kühlflüssigkeit einen vom Istwert der Betriebstemperaturgröße abhängigen unteren und/oder oberen Grenzwert derart vorgibt, dass eine temperaturbedingte Viskositätsänderung der zugeführten Kühlflüssigkeit kompensiert wird.

Durch Vorgabe eines entsprechenden unteren und/oder oberen Grenzwerts lässt sich nicht nur eine ausreichende Versorgung der Motorgeneratoreinheit mit Kühlflüssigkeit zum Zwecke ihrer Schmierung aufrechterhalten, sondern auch eine unerwünschte, zu übermäßigen Scher- bzw. Reibungskräften führende Flutung des Luftspalts vermeiden, wobei durch Einbeziehung des Istwerts der Betriebstemperaturgröße zusätzlich eine temperaturbedingte Viskositätsänderung der zugeführten Kühlflüssigkeit kompensierbar ist. Schließt die Kontrolleinrichtung auf Grundlage des erfassten Istwerts der Betriebstemperaturgröße auf eine erhöhte Viskosität der Kühlflüssigkeit, so veranlasst diese eine Absenkung des oberen Grenzwerts bzw. eine Anhebung des unteren Grenzwerts dahingehend, dass den erhöhten Scher- bzw. Reibungskräften im Luftspalt bzw. der reduzierten Schmierfähigkeit der Kühlflüssigkeit Rechnung getragen wird. Erkennt die Kontrolleinrichtung auf Grundlage des erfassten Istwerts der Betriebstemperaturgröße hingegen, dass die Viskosität der Kühlflüssigkeit erniedrigt ist, so veranlasst diese eine Anhebung des oberen Grenzwerts bzw. eine Absenkung des unteren Grenzwerts dahingehend, dass den verringerten Scher- bzw. Reibungskräften im Luftspalt bzw. der erhöhten Schmierfähigkeit der Kühlflüssigkeit Rechnung getragen wird. Auf diese Weise lässt sich eine temperaturorientierte und damit den tatsächlichen Kühlbedarf der elektrischen Motorgeneratoreinheit berücksichtigende Zufuhr von Kühlflüssigkeit realisieren.

Die Erfassung des Istwerts der Betriebstemperaturgröße erfolgt beispielsweise mittels eines im Bereich des Luftspalts angeordneten Temperatursensors, dessen Sensorsignale von der Kontrolleinrichtung ausgewertet werden, wobei die Kontrolleinrichtung den Druck und/oder Volumenstrom der zugeführten Kühlflüssigkeit nach Maßgabe der ausgewerteten Sensorsignale durch geeignete Ansteuerung eines elektrisch betätigbaren Ventils oder einer elektrisch betätigbaren Blende anpasst.

Bei der Kühlflüssigkeit handelt es sich insbesondere um herkömmliches Hydraulik- oder Getriebeöl, das der Schmierung der Motorgeneratoreinheit sowie gegebenenfalls einer damit verbundenen Getriebebaugruppe dient. Die Motorgeneratoreinheit kann hierbei als innengekühlter Synchronmotorgenerator ausgebildet sein, bei dem die Kühlflüssigkeit durch eine im Rotor verlaufende zentrale Bohrung und von dort über zugehörige Radialbohrungen in den Luftspalt bzw. in Richtung der Wickelköpfe geleitet wird. Vorteilhafte Ausführungen der erfindungsgemäßen Anordnung gehen aus den Unteransprüchen hervor.

Vorzugsweise passt die Kontrolleinrichtung den Druck und/oder Volumenstrom der zugeführten Kühlflüssigkeit derart an, dass der erfasste Istwert an einen für einen Motorbetrieb der Motorgeneratoreinheit vorgegebenen Sollwert der Betriebstemperaturgröße angeglichen wird. Durch entsprechende Vorgabe des Sollwerts der Betriebstemperaturgröße kann während des Motorbetriebs der Motorgeneratoreinheit sichergestellt werden, dass nur so viel Kühlflüssigkeit in den Luftspalt geleitet wird, wie zur Kühlung der Statorwicklungen - gemessen am aktuellen Betriebszustand der Motorgeneratoreinheit - tatsächlich erforderlich ist. Die zwischen Rotor und Stator befindliche Kühlflüssigkeitsmenge sowie die aufgrund dessen verursachten wirkungsgradmindernden Scher- bzw. Reibungskräfte lassen sich solchermaßen auf ein unbedingt erforderliches Maß reduzieren. Die Angleichung des Istwerts an den Sollwert der Betriebstemperaturgröße erfolgt insbesondere im Sinne einer Minimierung einer zwischen den beiden Werten vorliegenden Regelabweichung, wozu die Kontrolleinrichtung einen zugehörigen Regelkreis aufweist.

Zusätzlich kann seitens der Kontrolleinrichtung eine Vorsteuerung des Drucks und/oder Volumenstroms der zugeführten Kühlflüssigkeit in Sinne einer Anpassung an den zu erwartenden Kühlbedarf der Motorgeneratoreinheit erfolgen. Der zu erwartende Kühlbedarf wird von der Kontrolleinrichtung auf Grundlage des aktuellen Betriebszustands der Motorgeneratoreinheit abgeleitet. Letzterer ergibt sich aus charakteristischen Motorkenngrößen, wie der Motordrehzahl, dem Motormoment oder der Motorleistung. Die charakteristischen Motorkenngrößen werden der Kontrolleinrichtung seitens einer Motorsteuerung zur Verfügung gestellt. Der zu erwartende Kühlbedarf lässt sich hierbei aus einem in der Kontrolleinrichtung hinterlegten Verlustmodell ermitteln, das beispielsweise in einer entsprechenden Polynomfunktion oder einer Look-Up-Tabelle mathematisch abgebildet ist. Die Vorsteuerung erlaubt es, den Druck bzw. Volumenstrom der zugeführten Kühlflüssigkeit vorausschauend und dynamisch an den aufgrund des aktuellen Betriebszustands zu erwartenden Kühlbedarf anzupassen, wodurch eine verbesserte Regelung des Istwerts der Betriebstemperaturgröße ermöglicht wird.

Des Weiteren ist es vorstellbar, dass die Kontrolleinrichtung den Druck und/oder Volumenstrom der zugeführten Kühlflüssigkeit während eines Generatorbetriebs der elektrischen Motorgeneratoreinheit im Sinne der Erzielung einer erhöhten Bremswirkung anpasst. Auf diese Weise wird eine Retarderfunktion verwirklicht, beispielsweise zur Unterstützung eines an einem landwirtschaftlichen Nutzfahrzeug mittels herkömmlicher Radbremseinrichtungen durchgeführten Abbremsvorgangs. Hierzu kann der Luftspalt mit Kühlflüssigkeit durch Aufsteuerung des elektrisch betätigbaren Ventils oder der elektrisch betätigbaren Blende geflutet werden, wodurch sich maximal mögliche Scher- bzw. Reibungskräfte zwischen Rotor und Stator ergeben.

Die Anpassung des Drucks und/oder Volumenstroms der zugeführten Kühlflüssigkeit kann in diesem Fall unabhängig vom erfassten Istwert der Betriebstemperaturgröße erfolgen. Mit anderen Worten werden Druck und/oder Volumenstrom unabhängig vom erfassten Istwert der Betriebstemperaturgröße und damit einer gegenüber dem vorgegebenen Sollwert möglicherweise vorliegenden Abweichung festgesetzt. Eine Variation ist jedoch in Abhängigkeit der gewünschten Bremswirkung denkbar, beispielsweise nach Maßgabe einer entsprechenden Bremsanforderung eines Fahrzeugbedieners.

Die erfindungsgemäße Anordnung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine beispielhafte Ausführungsform der erfindungsgemäßen Anordnung zur Flüssigkeitskühlung einer elektrischen Motorgeneratoreinheit,
- Fig. 2: ein Blockschaltbild eines von der in Fig. 1 dargestellten erfindungsgemäßen Anordnung umfassten Regelkreises, und
- Fig. 3: ein Flussdiagramm zur Veranschaulichung der Funktionsweise der in Fig. 1 dargestellten erfindungsgemäßen Anordnung.

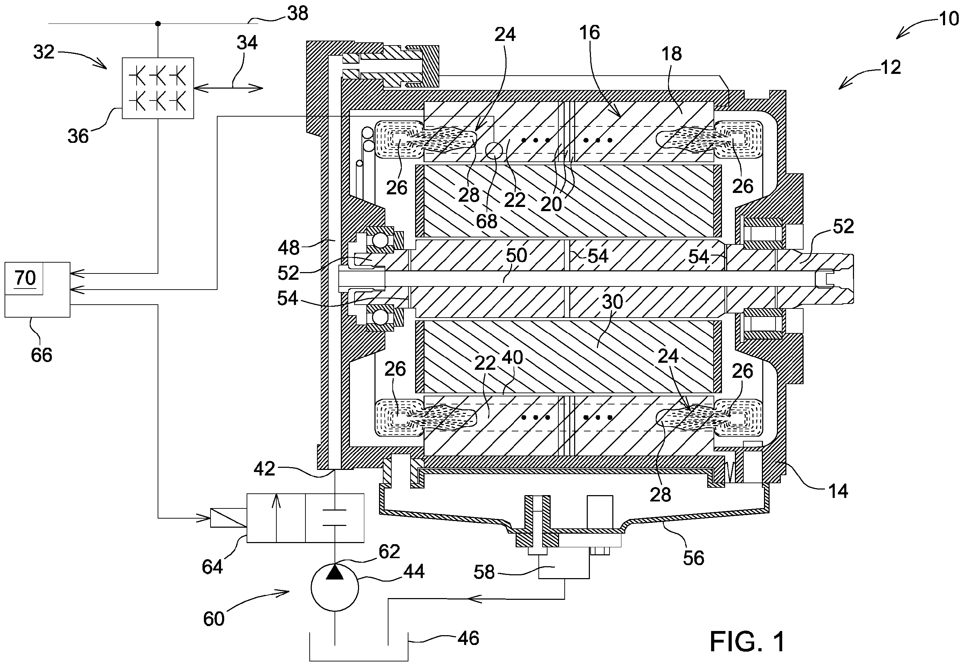

Fig. 1 zeigt eine beispielhafte Ausführungsform der erfindungsgemäßen Anordnung zur Flüssigkeitskühlung einer elektrischen Motorgeneratoreinheit, die Bestandteil einer stufenlos schaltbaren Getriebebaugruppe eines nicht dargestellten landwirtschaftlichen Nutzfahrzeugs ist.

Die Anordnung 10 umfasst eine elektrische Motorgeneratoreinheit 12, wobei diese im vorliegenden Fall als innengekühlter Synchronmotorgenerator 14 ausgebildet ist. Der Synchronmotorgenerator 14 weist einen Stator 16 in Gestalt eines aus hochpermeablem Eisenmaterial bestehenden Statorblechpakets 18 auf. Das Statorblechpaket 18 besteht zur Verringerung unerwünschter Wirbelstromverluste aus einer Vielzahl axial aneinandergereihter Statorbleche 20, von denen aus Gründen der Übersichtlichkeit in Fig. 1 lediglich drei hervorgehoben sind. Die als Automatenstanzteile hergestellten Statorbleche 20 weisen jeweils eine Stärke von 0,5 bis 5 mm auf.

Entlang eines Innenumfangs des Statorblechpakets 18 ist eine Vielzahl axial verlaufener Wicklungsnuten 22 vorgesehen. Jede der gleichartig ausgebildeten Wicklungsnuten 22 dient der Aufnahme von aus Kupferlackdraht hergestellten Statorwicklungen 24. Die stirnseitig an dem Statorblechpaket 18 austretenden Statorwicklungen 24 bilden an ihren Enden zugehörige Wicklungsköpfe 26. Zur Vermeidung von Kurzschlüssen sind die Statorwicklungen 24 jeweils von einer folienartigen Nutisolation 28 umgeben. Bei der folienartigen Nutisolation 28 handelt es sich beispielsweise um eine Kaptonfolie.

Des Weiteren umfasst der Synchronmotorgenerator 14 einen innerhalb des Statorblechpakets 18 drehbar gelagerten zylindrischen Rotor 30. Der aus permanent magnetisiertem Material bestehende Rotor 30 ist zur Durchführung eines Motorbetriebs unter der Wirkung eines mittels der Statorwicklungen 24 erzeugbaren magnetischen Wechselfeldes in Drehung versetzbar. Hierzu werden die Statorwicklungen 24 seitens einer Motorsteuerung 32 mit Dreiphasenstrom 34 aus einem Zweiwegeinverter 36 versorgt, der seinerseits aus einem Gleichstromkreis 38 des landwirtschaftlichen Nutzfahrzeugs gespeist wird. Umgekehrt kann der Synchronmotorgenerator 14 auch zur Durchführung eines Generatorbetriebs dienen, wozu der Rotor 30 von außen mittels einer nicht dargestellten Antriebseinrichtung, beispielsweise eines von dem landwirtschaftlichen Nutzfahrzeug umfassten Verbrennungsmotors, in Drehung versetzt wird. Der dabei von den Statorwicklungen 24 erzeugte Dreiphasenstrom 34 wird dem Zweiwegeinverter 36 zur Speisung des Gleichstromkreises 38 in umgekehrter Richtung zugeführt.

Stator 16 und Rotor 30 sind durch einen magnetischen Luftspalt 40 voneinander getrennt. Der zwischen Stator 16 und Rotor 30 verlaufende Luftspalt 40 weist eine Abmessung von 0,3 bis 0,5 mm auf.

Um die in den Statorwicklungen 24 betriebsbedingt auftretende Verlustwärme abzuführen, weist der Synchronmotorgenerator 14 einen Einlass 42 auf, über den mittels eines Kompressors 44 unter Druck gesetzte Kühlflüssigkeit von außen aus einem Reservoir 46 in einen Versorgungskanal 48 des Synchronmotorgenerators 14 geleitet werden kann. Die Kühlflüssigkeit gelangt von dort durch eine zentrale Bohrung 50 innerhalb des Rotors 30 zu im Bereich zugehöriger Rotorflansche 52 bzw. entlang des Rotors 30 ausgebildete Radialbohrungen 54, aus denen die Kühlflüssigkeit bei sich drehendem Rotor 30 in Richtung der Wicklungsköpfe 26 bzw. des Luftspalts 40 geschleudert wird, um die Wicklungsköpfe 26 bzw. das an den Luftspalt 40 angrenzende Statorblechpaket 18 einschließlich der darin verlaufenden Statorwicklungen 24 zu kühlen. Die aus dem Luftspalt 40 sowie von den Wicklungsköpfen 26 abfließende Kühlflüssigkeit wird in einer Bodenwanne 56 des Synchronmotorgenerators 14 gesammelt und danach über eine Ablaufleitung 58 in das Reservoir 46 zurückgeführt.

Bei der Kühlflüssigkeit handelt es sich um aus einem zentralen Versorgungssystem 60 der landwirtschaftlichen Nutzfahrzeugs abgezweigtes Hydraulik- oder Getriebeöl, dessen Druck systemseitig durch den Kompressor 44 vorgegeben ist.

Zur Realisierung einer temperaturorientierten und damit den tatsächlichen Kühlbedarf des Synchronmotorgenerators 14 berücksichtigenden Zufuhr von Kühlflüssigkeit während des Motorbetriebs, befindet sich zwischen einem hochdruckseitigen Auslass 62 des Kompressors 44 und dem Einlass 42 des Synchronmotorgenerators 14 ein elektrisch betätigbares Ventil 64. Eine Kontrolleinrichtung 66 dient der Ansteuerung des elektrisch betätigbares Ventils 64 in Abhängigkeit eines erfassten Istwerts Tᵢₛₜ einer Betriebstemperaturgröße des Synchronmotorgenerators 14. Die Erfassung des Istwerts Tᵢₛₜ der Betriebstemperaturgröße erfolgt mittels eines im Bereich des Luftspalts 40 im Statorblechpaket 18 angeordneten Temperatursensors 68, dessen Sensorsignale von der Kontrolleinrichtung 66 ausgewertet werden, wobei die Kontrolleinrichtung 66 Druck p und/oder Volumenstrom Q der zugeführten Kühlflüssigkeit nach Maßgabe des Ergebnisses der Auswertung der Sensorsignale durch geeignete Ansteuerung des elektrisch betätigbaren Ventils 64 anpasst.

Der Vollständigkeit halber sei erwähnt, dass es sich bei dem elektrisch betätigbaren Ventil 64 lediglich um eines einer Vielzahl denkbarer Mittel zur Anpassung des Drucks p und/oder Volumenstroms Q handelt, so kann es sich alternativ auch um eine elektrisch betätigbare Blende oder dergleichen handeln.

Genauer gesagt erfolgt die Anpassung des Drucks p und/oder Volumenstroms Q der zugeführten Kühlflüssigkeit seitens der Kontrolleinrichtung 66 derart, dass der erfasste Istwert Tᵢₛₜ an einen für den Motorbetrieb vorgegebenen Sollwert Tₛₒₗₗ der Betriebstemperaturgröße angeglichen wird. Durch entsprechende Vorgabe des Sollwerts Tₛₒₗₗ der Betriebstemperaturgröße kann während des Motorbetriebs des Synchronmotorgenerators 14 sichergestellt werden, dass nur so viel Kühlflüssigkeit in den Luftspalt 40 geleitet wird, wie zur Kühlung der Statorwicklungen 24 - gemessen am aktuellen Betriebszustand des Synchronmotorgenerators 14 - tatsächlich erforderlich ist. Der Sollwert Tₛₒₗₗ ist hierbei fest vorgegeben und ergibt sich aus den Leistungsspezifikationen des jeweils verwendeten Synchronmotorgenerators 14.

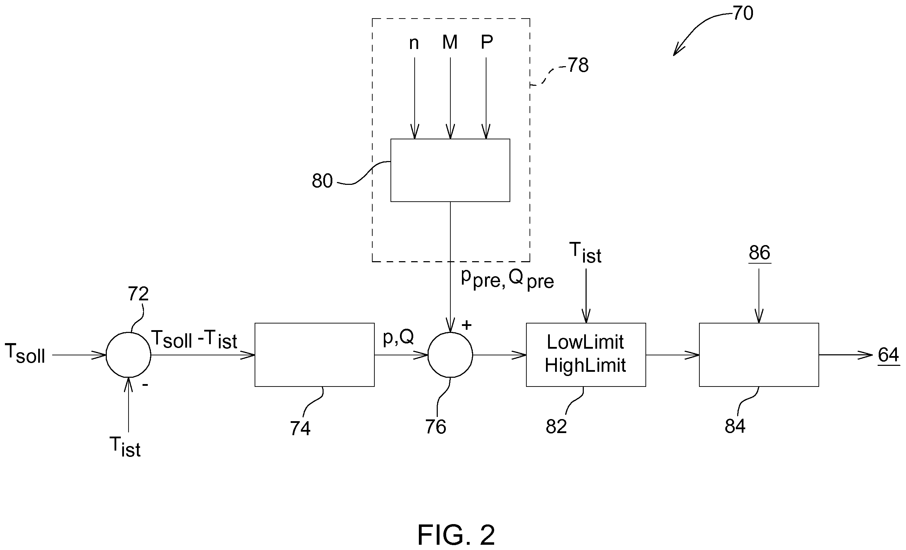

Die Angleichung des Istwerts Tᵢₛₜ an den Sollwert Tₛₒₗₗ der Betriebstemperaturgröße erfolgt im Sinne einer Minimierung einer zwischen den beiden Werten vorliegenden Regelabweichung Tₛₒₗₗ-Tᵢₛₜ, wozu die Kontrolleinrichtung 66 einen zugehörigen sowie in Fig. 2 als Blockbild veranschaulichten Regelkreis 70 aufweist.

Der in Fig. 2 dargestellte Regelkreis 70 nimmt mittels eines Subtrahierers 72 einen Vergleich zwischen dem Istwert Tᵢₛₜ und dem Sollwert Tₛₒₗₗ der Betriebstemperaturgröße vor. Eine sich daraus ergebende Regelabweichung Tₛₒₗₗ-Tᵢₛₜ wird einem nachfolgenden Regler 74 übermittelt, der einen über das elektrisch betätigbare Ventil 64 einzusteuernden Druck p und/oder Volumenstrom Q für die zuzuführende Kühlflüssigkeit ermittelt, wobei mittels eines Addierers 76 durch Aufschaltung eines Vorsteuerdrucks pₚᵣₑ und/oder Vorsteuervolumenstroms Qₚᵣₑ zusätzlich eine Vorsteuerung 78 des einzusteuernden Drucks p und/oder Volumenstroms Q erfolgt, mit dem Ziel, diesen vorausschauend an den zu erwartenden Kühlbedarf des Synchronmotorgenerators 14 anzupassen.

Der zu erwartende Kühlbedarf wird von der Kontrolleinrichtung 66 auf Grundlage des aktuellen Betriebszustands des Synchronmotorgenerators 14 abgeleitet. Letzterer ergibt sich aus charakteristischen Motorkenngrößen, im vorliegenden Fall der Motordrehzahl n, dem Motormoment M sowie der Motorleistung P. Die charakteristischen Motorkenngrößen werden der Kontrolleinrichtung 66 seitens der Motosteuerung 32 zur Verfügung gestellt. Der zu erwartende Kühlbedarf wird hierbei aus einem in der Kontrolleinrichtung 66 hinterlegten Verlustmodell 80 ermittelt, das beispielweise in einer entsprechenden Polynomfunktion oder einer Look-Up-Tabelle mathematisch abgebildet ist.

Die Vorsteuerung 78 ermöglicht es, den Druck p bzw. Volumenstrom V der zugeführten Kühlflüssigkeit vorausschauend und dynamisch an den aufgrund des aktuellen Betriebszustands zu erwartenden Kühlbedarf des Synchronmotorgenerators 14 anzupassen, wodurch eine verbesserte Regelung des Istwerts Tᵢₛₜ der Betriebstemperaturgröße ermöglicht wird.

Ferner begrenzt die Kontrolleinrichtung 66 den einzusteuernden Druck p und/oder Volumenstrom Q der zuzuführenden Kühlflüssigkeit während des Motorbetriebs nach oben und/oder unten hin. Hierzu gibt die Kontrolleinrichtung 66 in einem Begrenzer 82 einen vom Istwert Tᵢₛₜ der Betriebstemperaturgröße abhängigen unteren Grenzwert LowLimit und/oder oberen Grenzwert HighLimit derart vor, dass eine temperaturbedingte Viskositätsänderung der zugeführten Kühlflüssigkeit kompensiert wird. Schließt die Kontrolleinrichtung 66 daher auf Grundlage des erfassten Istwerts Tᵢₛₜ der Betriebstemperaturgröße auf eine erhöhte Viskosität der Kühlflüssigkeit, so veranlasst diese eine Absenkung des oberen Grenzwerts HighLimit bzw. eine Anhebung des unteren Grenzwerts LowLimit dahingehend, dass den erhöhten Scher- bzw. Reibungskräften im Luftspalt 40 bzw. der reduzierten Schmierfähigkeit der Kühlflüssigkeit Rechnung getragen wird. Erkennt die Kontrolleinrichtung 66 auf Grundlage des erfassten Istwerts Tᵢₛₜ der Betriebstemperaturgröße hingegen, dass die Viskosität der Kühlflüssigkeit erniedrigt ist, so veranlasst diese eine Anhebung des oberen Grenzwerts HighLimit bzw. eine Absenkung des unteren Grenzwerts LowLimit dahingehend, dass den verringerten Scher- bzw. Reibungskräften im Luftspalt 40 bzw. der erhöhten Schmierfähigkeit der Kühlflüssigkeit Rechnung getragen wird.

Die weitere Vorgehensweise hängt nun davon ab, ob sich der Synchronmotorgenerator 14 im Motor- oder Generatorbetrieb befindet, und ob der Synchronmotorgenerator 14 im Generatorbetrieb zur Verwirklichung einer Retarderfunktion herangezogen wird.

Im Falle des Motorbetriebs erfolgt die Ansteuerung des elektrisch betätigbaren Ventils 64 im Sinne einer Optimierung des Kühlleistungs-Wirkungsgrad-Verhältnisses des Synchronmotorgenerators 14, mithin nach Maßgabe des vorgesteuerten sowie gegebenenfalls begrenzten Drucks p und/oder Volumenstroms Q.

Wird der Synchronmotorgenerator 14 hingegen im Generatorbetrieb zur Verwirklichung einer Retarderfunktion 84 herangezogen, beispielsweise zur Unterstützung eines mit herkömmlichen Radbremseinrichtungen durchgeführten Abbremsvorgangs des landwirtschaftlichen Nutzfahrzeugs, so erhöht die Kontrolleinrichtung 66 den einzusteuernden Druck p und/oder Volumenstrom Q der zuzuführenden Kühlflüssigkeit auf einen zur Erzielung einer erhöhten Bremswirkung vorgesehenen Maximalwert. Zu diesem Zweck wird der Luftspalt 40 nach Maßgabe einer entsprechenden Bremsanforderung 86 eines Fahrzeugbedieners durch Aufsteuerung des elektrisch betätigbaren Ventils 64 geflutet, wodurch sich dementsprechend hohe Scher- bzw. Reibungskräfte zwischen Rotor 30 und Stator 16 ergeben.

Die Anpassung des eizusteuernden Drucks p und/oder Volumenstroms Q der zuzuführenden Kühlflüssigkeit erfolgt in diesem Fall unabhängig vom erfassten Istwert Tᵢₛₜ der Betriebstemperaturgröße. Mit anderen Worten werden Druck p und/oder Volumenstrom Q unabhängig vom erfassten Istwert Tᵢₛₜ der Betriebstemperaturgröße und damit einer gegenüber dem vorgegebenen Sollwert Tₛₒₗₗ möglicherweise vorliegenden Abweichung festgesetzt.

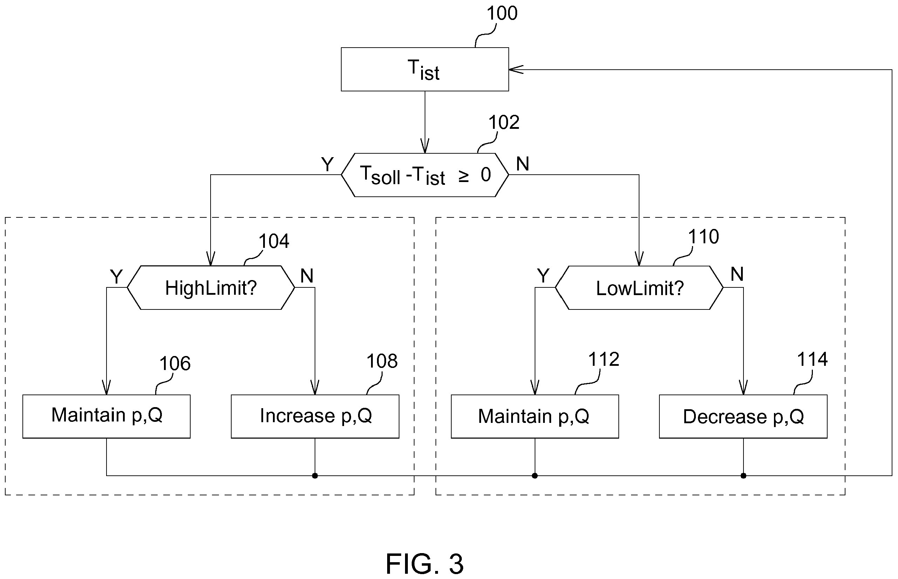

Die Funktionsweise der Anordnung 10 ist in Fig. 3 für den Fall des Motorbetriebs des Synchronmotorgenerators 14 anhand eines Flussdiagramms veranschaulicht. Das von der Kontrolleinrichtung 66 durchgeführte Steuerverfahren startet in einem ersten Schritt 100 mit der Erfassung des Istwerts Tᵢₛₜ der Betriebstemperaturgröße, wobei diese in einem nachfolgenden zweiten Schritt 102 mit dem für die Betriebstemperaturgröße vorgegebenen Sollwert Tₛₒₗₗ verglichen wird. Ergibt sich aufgrund des Vergleichs, dass der Istwert Tᵢₛₜ größer ist als der vorgegebene Sollwert Tₛₒₗₗ, so wird in einem dritten Schritt 104 ferner die Einhaltung des für den einzusteuernden Druck p und/oder Volumenstrom Q vorgegebenen oberen Grenzwerts HighLimit überprüft. Ist dieser erreicht, so wird der aktuell eingesteuerte Druck p und/oder Volumenstrom Q in einem vierten Schritt 106 unverändert aufrechterhalten und das Steuerverfahren kehrt unmittelbar zum ersten Schritt 100 zurück. Ist der obere Grenzwert HighLimit hingegen nicht erreicht, so wird der einzusteuernde Druck p und/oder Volumenstrom Q in einem fünften Schritt 108 durch entsprechende Ansteuerung des elektrisch betätigbaren Ventils 64 nach Maßgabe des Reglers 74 bzw. der Vorsteuerung 78 erhöht. Anschließend kehrt das Steuerverfahren zum ersten Schritt 100 zurück.

Ergibt sich im zweiten Schritt 102 hingegen, dass der Istwert Tᵢₛₜ kleiner oder gleich dem vorgegebenen Sollwert Tₛₒₗₗ ist, so wird in einem sechsten Schritt 110 ferner die Einhaltung des für den einzusteuernden Druck p und/oder Volumenstrom Q vorgegebenen unteren Grenzwerts LowLimit überprüft. Ist dieser erreicht, so wird der aktuell eingesteuerte Druck p und/oder Volumenstrom Q in einem siebten Schritt 112 unverändert aufrechterhalten und das Steuerverfahren kehrt unmittelbar zum ersten Schritt 100 zurück. Ist der untere Grenzwert LowLimit hingegen nicht erreicht, so wird der einzusteuernde Druck p und/oder Volumenstrom Q in einem achten Schritt 114 durch entsprechende Ansteuerung des elektrisch betätigbaren Ventils 64 nach Maßgabe des Reglers 74 bzw. der Vorsteuerung 78 abgesenkt. Anschließend kehrt das Steuerverfahren zum ersten Schritt 100 zurück.

## Patentansprüche

1. Anordnung zur Flüssigkeitskühlung einer elektrischen Motorgeneratoreinheit, mit einer elektrischen Motorgeneratoreinheit (12), die einen zwischen einem Stator (16) und einem Rotor (30) verlaufenden magnetischen Luftspalt (40) aufweist, wobei der Luftspalt (40) zur Kühlung der elektrischen Motorgeneratoreinheit (12) mit von außen zugeführter Kühlflüssigkeit beaufschlagbar ist, und mit einer Kontrolleinrichtung (66), die den Druck (p) und/oder Volumenstrom (Q) der zugeführten Kühlflüssigkeit in Abhängigkeit eines erfassten Istwerts (Tᵢₛₜ) einer Betriebstemperaturgröße der elektrischen Motorgeneratoreinheit (12) anpasst sowie während des Motorbetriebs nach oben und/oder unten hin begrenzt,
**dadurch gekennzeichnet, dass** die Kontrolleinrichtung (66) zur Begrenzung des Drucks (p) und/oder Volumenstroms (Q) der zugeführten Kühlflüssigkeit einen vom Istwert (Tᵢₛₜ) der Betriebstemperaturgröße abhängigen unteren und/oder oberen Grenzwert (LowLimit, HighLimit) derart vorgibt, dass eine temperaturbedingte Viskositätsänderung der zugeführten Kühlflüssigkeit kompensiert wird.

2. Anordnung nach Anspruch 1, **dadurch gekennzeichnet, dass** die Kontrolleinrichtung (66) den Druck (p) und/oder Volumenstrom (Q) der zugeführten Kühlflüssigkeit derart anpasst, dass der erfasste Istwert (Tᵢₛₜ) an einen für einen Motorbetrieb der Motorgeneratoreinheit (12) vorgegebenen Sollwert (Tₛₒₗₗ) der Betriebstemperaturgröße angeglichen wird.

3. Anordnung nach einem der Ansprüche 1 oder 2, **dadurch gekennzeichnet, dass** seitens der Kontrolleinrichtung (66) eine Vorsteuerung (78) des Drucks (p) und/oder Volumenstroms (Q) der zugeführten Kühlflüssigkeit in Sinne einer Anpassung an den zu erwartenden Kühlbedarf der Motorgeneratoreinheit (12) erfolgt.

4. Anordnung nach Anspruch 1, **dadurch gekennzeichnet, dass** die Kontrolleinrichtung (66) den Druck (p) und/oder Volumenstrom (Q) der zugeführten Kühlflüssigkeit während eines Generatorbetriebs der elektrischen Motorgeneratoreinheit (12) im Sinne der Erzielung einer erhöhten Bremswirkung anpasst.

5. Anordnung nach Anspruch 4, **dadurch gekennzeichnet, dass** die Anpassung des Drucks (p) und/oder Volumenstroms (Q) der zugeführten Kühlflüssigkeit unabhängig vom erfassten Istwert (Tᵢₛₜ) der Betriebstemperaturgröße erfolgt.

## Claims

1. Liquid cooling assembly for an electrical motor generator unit, having an electrical motor generator unit (12) which has a magnetic air gap (40) running between a stator (16) and a rotor (30), wherein a cooling fluid which is fed in from the outside can be applied to the air gap (40) in order to cool the electrical motor generator unit (12), and having a control device in dependence (66) which adapts the pressure (p) and/or volume flow (Q) of the fed-in cooling fluid on a detected actual value (T_{act}) of an operating temperature variable of the electrical motor generator unit (12), and limits said pressure (p) and/or volume flow (Q) in the upward and/or downward directions during the operation of the engine,
**characterized in that**, in order to limit the pressure (p) and/or volume flow (Q) of the fed-n cooling fluid, the control device (66) predefines a lower and/or upper limiting value (LowLimit, HighLimit), dependent on the actual value (T_{act}) of the operating temperature variable, in such a way that a temperature-dependent change in viscosity of the fed-in cooling fluid is compensated.

2. Assembly according to Claim 1, **characterized in that** the control device (66) adapts the pressure (p) and/or volume flow (Q) of the fed-in cooling fluid in such a way that the detected actual value (T_{act}) is approximated to a setpoint value (Tₛₑₜ), predefined for a motor operation of the motor generator unit (12), of the operating temperature variable.

3. Assembly according to one of Claims 1 and 2, **characterized in that** control (78) of the pressure (p) and/or volume flow (Q) of the fed-in cooling fluid is carried out at the control device (66) in terms of adaptation to the expected cooling demand of the motor generator unit (12).

4. Assembly according to Claim 1, **characterized in that** the control device (66) adapts the pressure (p) and/or volume flow (Q) of the fed-in cooling fluid during a generator operation of the electrical motor generator unit (12) in terms of achieving an increased braking effect.

5. Assembly according to Claim 4, **characterized in that** the adaption of the pressure (p) and/or volume flow (Q) of the fed-in cooling fluid is carried out independently of the detected actual value (Tₛₑₜ) of the operating temperature variable.

## Revendications

1. Arrangement de refroidissement par liquide d'un groupe moteur-générateur, comprenant un groupe moteur-générateur électrique (12) qui possède un entrefer (40) qui s'étend entre un stator (16) et un rotor (30), l'entrefer (40) pouvant être alimenté par un liquide de refroidissement acheminé depuis l'extérieur en vue de refroidir le groupe moteur-générateur électrique (12), et comprenant un dispositif de contrôle (66) qui adapte la pression (p) et/ou le débit volumique (Q) du liquide de refroidissement acheminé en fonction d'une valeur réelle (Tᵢₛₜ) acquise d'une grandeur de température de fonctionnement du groupe moteur-générateur électrique (12) et les limite également vers le haut et/ou vers le bas pendant le fonctionnement en moteur,
**caractérisé en ce que**
le dispositif de contrôle (66), en vue de limiter la pression (p) et/ou le débit volumique (Q) du liquide de refroidissement acheminé, prédéfinit une valeur limite inférieure et/ou supérieure (LowLimit, HighLimit) dépendante de la valeur réelle (Tᵢₛₜ) de la grandeur de température de fonctionnement de telle sorte qu'une variation de viscosité du liquide de refroidissement acheminé est compensée.

2. Arrangement selon la revendication 1, **caractérisé en ce que** le dispositif de contrôle (66) adapte la pression (p) et/ou le débit volumique (Q) du liquide de refroidissement acheminé de telle sorte que la valeur réelle (Tᵢₛₜ) acquise est ajustée à une valeur de consigne (Tₛₒₗₗ) de la grandeur de température de fonctionnement prédéfinie pour un fonctionnement en moteur du groupe moteur-générateur (12).

3. Arrangement selon l'une des revendications 1 ou 2, **caractérisé en ce qu'**une commande pilote (78) de la pression (p) et/ou du débit volumique (Q) du liquide de refroidissement acheminé est effectuée au niveau du dispositif de contrôle (66) dans le sens d'une adaptation au besoin de refroidissement à attendre du groupe moteur-générateur (12).

4. Arrangement selon la revendication 1, **caractérisé en ce que** le dispositif de contrôle (66) adapte la pression (p) et/ou le débit volumique (Q) du liquide de refroidissement acheminé pendant un fonctionnement en générateur du groupe moteur-générateur électrique (12) en vue d'obtenir un effet de freinage accru.

5. Arrangement selon la revendication 4, **caractérisé en ce que** l'adaptation de la pression (p) et/ou du débit volumique (Q) du liquide de refroidissement acheminé est effectuée indépendamment de la valeur réelle (Tᵢₛₜ) acquise de la grandeur de température de fonctionnement.
